# NEUE EUROPÄISCHE PATENTSCHRIFT

(11) **EP 1 137 710 B2**
(45) Veröffentlichungstag und Bekanntmachung des Hinweises auf die Entscheidung über den Einspruch: **26.11.2008**
(45) Hinweis auf die Patenterteilung: 26.03.2003
(21) Anmeldenummer: 99964501.3
(22) Anmeldetag: 25.11.1999
(51) Int. Cl.: C08L 69/00, C08K 3/00

(54) **POLYCARBONAT-FORMMASSEN MIT VERBESSERTEN MECHANISCHEN EIGENSCHAFTEN**
POLYCARBONATE MOLDING MATERIALS EXHIBITING IMPROVED MECHANICAL PROPERTIES
MATIERES A MOULER A BASE DE POLYCARBONATE PRESENTANT DES CARACTERISTIQUES MECANIQUES AMELIOREES

(30) Priorität: 08.12.1998 DE 19856485
(43) Veröffentlichungstag der Anmeldung: 04.10.2001
(73) Patentinhaber: Bayer MaterialScience AG, 51368 Leverkusen (DE)
(72) Erfinder: ZOBEL, Michael, D-40547 Düsseldorf (DE); ECKEL, Thomas, D-41540 Dormagen (DE); WITTMANN, Dieter, D-51375 Leverkusen (DE); KELLER, Bernd, D-47608 Geldern (DE)
(86) Internationale Anmeldenummer: PCT/EP1999/009104
(87) Internationale Veröffentlichungsnummer: WO 2000/034389

(56) Entgegenhaltungen:
- EP-A- 0 001 913
- EP-A- 0 409 195
- EP-A- 0 520 186
- EP-A- 0 627 458
- EP-A- 0 796 892
- WO-A1-98/12271
- DE-A- 19 530 200
- US-A- 3 130 177
- US-A- 4 772 655
- US-A- 5 153 247
- US-A- 5 849 827
- PATENT ABSTRACTS OF JAPAN vol. 1996, no. 12, 26. Dezember 1996 (1996-12-26) & JP 08 208972 A (TORAY IND INC), 13. August 1996 (1996-08-13)
- Translation of JP-A-04258662
- Sharad S. Parikh, Zinc sulfide as a pigment for Fiberglass reinforced thermoplastics, Proceedings by Reinforced plastics/Composites Institute, Annual Conference, 1984, Session 13-B, pages 1-4, in particular Table II and figures 1 and 2

## Beschreibung

Die vorliegende Erfindung betrifft Polycarbonat-Formmassen, enthaltend Zink-Verbindungen, die verbesserte mechanische Eigenschaften und einen verbesserten Rohton aufweisen.

Thermoplastische Formmassen insbesondere solche, die Homo- und/oder Copolymerisate von einem oder mehreren ethylenisch ungesättigten Monomeren, Polycarbonate sowie Polyester enthalten, sind aus einer Vielzahl Veröffentlichungen bekannt. Dies gilt insbesondere für den Einsatz von ABS-Polymerisaten. Nur beispielhaft sei auf folgende Dokumente hingewiesen: DE-A 19 616, WO97/40092, EP-A 728 811, EP-A 315 868 (= US-A 4 937 285), EP-A 0 174 493 (US-P 4 983 658), US-P 5 030 675, JA 5 920 240, EP-A 0 363 608 (= US-PS 204 394), EP-A 0 767 204, EP-A 0 611 798, WO 96/27600, EP-A 0 754.

Die den diesem Stand der Technik beschriebenen thermoplastischen Formmassen sind in ihren mechanischen Eigenschaften noch verbesserungsbedürftig. Dies gilt insbesondere für die Anwendung dieser Formmassen in sicherheitsrelevanten Teilen z.B. in der Kfz-Industrie, wo hohe Anforderungen an die Reißdehnung, das ESC-Verhalten und die Wärmeformbeständigkeit gestellt werden. Außerdem bedarf der Rohton den bekannten Formmassen noch der Verbesserung.

EP-A 761 746 beschreibt Formmassen auf Basis Polycarbonat und gegebenenfalls anderen Thermoplasten, die feinstteilige anorganische Pulver und Flammschutzmittel enthalten. Es wird unter anderem Zinkoxid erwähnt. als mittlere Teilchendurchmesser werden 0,1 bis 100 nm genannt.

Überraschenderweise wurde nun gefunden, daß Polycarbonat-Formmassen einen verbesserten Rohton und verbesserte mechanische Eigenschaften aufweisen, wenn ihnen Zinkborat bestimmter Größe zugesetzt werden.

Gegenstand der Erfindung sind thermoplastische Formmassen enthaltend
A. 40 bis 98 Gew.-Teile, vorzugsweise 50 bis 95 Gew.-Teile, besonders bevorzugt 60 bis 90 Gew.-Teile eines aromatischen Polycarbonats,
B. 0 bis 50, vorzugsweise 1 bis 40 Gew.-Teile, eines Vinyl-(Co)-polymerisats aus wenigstens einem Monomeren ausgewählt aus der Reihe Styrol, α-Methylstyrol, kernsubstituierten Styrolen, C₁-C₈-Alkylmethacrylaten, C₁-C₈-Alkylacrylaten mit wenigstens einem Monomeren aus der Reihe Acrylnitril, Methacrylnitril, C₁-C₈-Alkylmethacrylaten, C₁-C₈-Alkylacrylaten, Maleinsäureanhydrid, N-substituierten Maleinimiden,
C. 0.5 bis 60 Gew.-Teilen, vorzugsweise 1 bis 40 Gew.-Teilen, besonders bevorzugt 2 bis 30 Gew.-Teilen eines Pfropfpolymerisates bestehend aus mindestens zwei Monomeren aus der Gruppe der ein- oder mehrfach ungesättigten Olefine, wie z.B. Ethylen, Propylen, Chloropren, Butadien, Isopren, Vinylacetat, Styrol, α-Methylstyrol, kernsubstituierte Styrole, Vinylcyanide, wie z. B. Acrylnitril, Methacrylnitril, Maleinsäureanhydrid, N-substituierte-Maleinimide,
D. 0.01 bis 30 Gew.-Teile, vorzugsweise 0.01 bis 20 Gew.-Teile, besonders bevorzugt 0.01 bis 10 Gew.-Teile, ganz besonders bevorzugt 0,1 bis 5 Gew.-Teile Zinkborat mit einem mittleren Teilchendurchmesser 1 nm bis 20 µm, bevorzugt 1 nm bis 10 µm.

Die erfindungsgemäßen Formmassen können als Zusatzstoffe (Komponente E) weiterhin enthalten: übliche Flammschutzmittel, feinstteilige anorganische Verbindungen oder fluorierte Polyolefine sowie Mischungen davon. Die Flammschutzmittel und feinstteiligen anorganischen Verbindungen werden im allgemeinen jeweils in einer Menge von 0,1 bis 25, vorzugsweise 2 bis 15 Gew.-Teilen verwendet. Die fluorierten Polyolefine werden im allgemeinen in einer Menge von 0,01 bis 5, vorzugsweise 0,05 bis 2 Gew.-Teilen eingesetzt.

Die Summe aller Gewichtsteile A + B + C + D + E ergibt 100

### Komponente A

Erfindungsgemäß geeignete, thermoplastische, aromatische Polycarbonate gemäß Komponente A sind solche auf Basis der Diphenole der Formel (I) 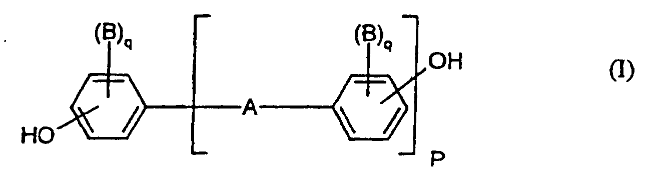 worin
- A: eine Einfachbindung C₁-C₅-Alkylen, C₂-C₅-Alkyliden, C₅-C₆-Cycloalkyliden, -S- oder -SO₂-,
- B: Chlor, Brom,
- q: 0, 1 oder 2 und
- p: 1 oder 0 sind,
oder alkylsubstituierte Dihydroxyphenylcycloalkane der Formel (II), 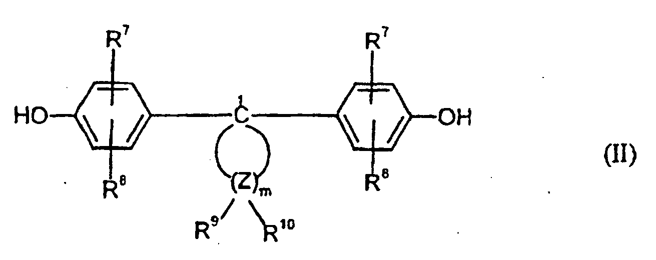 worin
- R⁷ und R⁸: unabhängig voneinander, jeweils Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4, 5, 6 oder 7, bevorzugt 4 oder 5,
- R⁹ und R¹⁰: für jedes Z individuell wählbar, unabhängig voneinander Wasserstoff oder C₁-C₆-Alkyl,
und
- Z: Kohlenstoff bedeutet, mit der Maßgabe, daß an mindestens einem Atom Z R⁹ und R¹⁰ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach den Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 28 42 005 oder Monoalkylphenol bzw. Dialkylphenol mit insgesamt 8 bis 20 C-Atomen in den Alkylsubstituenten gemäß deutscher Patentanmeldung P 3506472.2 wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (I) und/oder (II).

Die erfindungsgemäß geeigneten Polycarbonate A haben mittlere Molekulargewichte (M̅_{w}), Gewichtsmittel, gemessen z.B. durch Ultrazentrifugation oder Streulichtmessung) von 10.000 bis 200.000, vorzugsweise 20.000 bis 80.000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an tri- oder mehr als trifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden. Die aromatischen Polycarbonate der Komponente A können auch Polysiloxan-Blöcke enthalten. Deren Herstellung wird beispielsweise in der DE-OS 33 34 872 und in der US-PS 3 821 325 beschrieben.

### Komponente B

Erfindungsgemäß einsetzbare Vinyl-(Co)polymerisate gemäß Komponente B sind solche aus wenigstens einem Monomeren aus der Reihe: Styrol, α-Methylstyrol und/oder kernsubstituierten Styrolen, C₁-C₈-Alkylmethacrylat, C₁-C₈-Alkylacrylat (B.1) mit wenigstens einem Monomeren aus der Reihe: Acrylnitril, Methacrylnitril, C₁-C₈-Alkylmethacrylat, C₁-C₈-Alkylacrylat, Maleinsäureanhydrid und/oder N-substituierte Maleinimide (B.2).

C₁-C₈-Alkylacrylate bzw. C₁-C₈-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylsäureester wird Methylmethacrylat genannt.

Thermoplastische (Co)polymerisate mit einer Zusammensetzung gemäß Komponente B können bei der Pfropfpolymerisation zur Herstellung der Komponente C als Nebenprodukt entstehen, besonders dann, wenn große Mengen Monomere auf kleine Mengen Kautschuk gepfropft werden. Die erfindungsgemäß einzusetzende Menge an (Co)polymerisat B bezieht diese Nebenprodukte der Pfropfpolymerisation nicht mit ein.

Die (Co)polymerisate gemäß Komponente B sind harzartig, thermoplastisch und kautschukfrei.

Die thermoplastischen (Co)polymerisate B enthalten 50 bis 99, vorzugsweise 60 bis 95 Gew.-Teile B. 1 und 50 bis 1, vorzugsweise 40 bis 5 Gew.-Teile B.2.

Besonders bevorzugte (Co)polymerisate B sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methmethacrylat.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte M̅_{w} (Gewichtsmittel, ermittelt durch Lichtstreuung oder Sedimentation) zwischen 15.000 und 200.000.

Besonders bevorzugte erfindungsgemäße Copolymerisate B sind auch statistisch aufgebaute Copolymerisate aus Styrol und Maleinsäureanhydrid, die durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Die Molekulargewichte (Zahlenmittel M̅ₙ) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60.000 bis 200.000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinyl(Co)polymerisate B auch kemsubstituierte Styrole wie p-Methylstyrol, Vinyltoluol, 2,4-Dimethylstyrol und andere substituierte Styrole wie α-Methylstyrol, die gegebenenfalls halogeniert sein können, enthalten.

Komponente B kann auch eine Mischung von Vinyl(co)polymerisaten sein.

### Komponente C

Die Pfropfpolymerisate C umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C umfassen Pfropfpolymerisate aus:
C.1 5 bis 95, vorzugsweise 30 bis 80 Gew.-Teile, einer Mischung aus
C.1.1 50 bis 95 Gew.-Teilen Styrol, α-Methylstyrol, halogen- oder methylkernsubstituiertem Styrol, C₁-C₈-Alkylmethacrylat, insbesondere Methylmethacrylat, C₁-C₈-Alkylacrylat, insbesondere Methylmethacrylat oder Mischungen dieser Verbindungen und
C.1.2 5 bis 50 Gew.-Teilen Acrylnitril, Methacrylnitril, C₁-C₈-Alkylmethacrylaten, insbesondere Methylmethacrylat, C₁-C₈-Alkylacrylat, insbesondere Methacrylat, Maleinsäureanhydrid, C₁-C₄-alkyl-bzw. phenyl-N-substituierte Maleinimide oder Mischungen dieser Verbindungen auf
C.2 5 bis 95, vorzugsweise 20 bis 70 Gew.-Teilen Polymerisat mit einer Glasübergangstemperatur unter -10°C.

Bevorzugte Pfropfpolymerisate C sind z.B. mit Styrol und/oder Acrylnitril und/oder (Meth)-Acrylsäurealkylestern gepfropfte Polybutadiene, Butadien/Styrol-Copolymerisate und Acrylatkautschuke; d.h. Copolymerisate der in der DE-OS 194 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 23 48 377 (=US-PS 3 919 353) beschrieben sind.

Besonders bevorzugte Polymerisate C sind z.B. ABS-Polymerisate, wie sie z.B. in der DE-OS 20 35 390 (= US-PS 3 644 574) oder in der DE-OS 22 48 242 (= GB-PS 1 409 275) beschrieben sind.

Besonders bevorzugte Pfropfpolymerisate C sind Pfropfpolymerisate, die durch Pfropfreaktion von
I. 10 bis 70, vorzugsweise 15 bis 50, insbesondere 20 bis 40 Gew.-%, bezogen auf Pfropfprodukt, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol auf
II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage
erhältlich sind.

Der Gelanteil der Pfropfgrundlage II beträgt vorzugsweise mindestens 20 Gew.-%, bevorzugt mindestens 40 Gew.-% (in Toluol gemessen), der Pfropfgrad G 0,15 bis 0,55 und der mittlere Teilchendurchmesser d₅₀ des Pfropfpolymerisats 0,05 bis 2 µm, vorzugsweise 0,1 bis 0,6 µm betragen.

(Meth)-Acrylsäureester I sind Ester der Acrylsäure oder Methacrylsäure und einwertiger Alkoholen mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus
(a) 20 bis 90 Gew.-%, bezogen auf C, Acrylatkautschuk mit einer Glasübergangstemperatur unter -20°C als Pfropfgrundlage und
(b) 10 bis 80 Gew.-%, bezogen auf C, mindestens eines polymerisierbaren, ethylenisch ungesättigten Monomeren (vgl. C.1) als Pfropfmonomeren.

Die Acrylatkautschuke (a) der Polymerisate C sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in Offenlegungsschriften DE-OS 37 04 657, DE-OS 37 04 655, DE-OS 36 31 540 und DE-OS 36 31 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomeren in Gegenwart der Pfropfgrundlage gewonnen werden.

Komponente C kann auch eine Mischung von Pfropfpolymerisaten sein.

### Komponente D

Als Komponente D ist Zinkborat einsetzbar.

Der mittlere Teilchendurchmesser liegt erfindungsgemäß bei 1 nm bis 20 µm, bevorzugt 1 nm bis 10 µm.

Bei Einsatz von Zinkborat liegt der mittlere Teilchendurchmesser im Bereich von 0.5 µm bis 15 µm, bevorzugt 1µm - 12 µm, besonders bevorzugt bei 2 bis 10 µm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z.Polymere 250(1972), S. 782 bis 796.

Die Zink-Verbindungen können als Pulver, Pasten, Sole, Dispersionen oder Suspensionen vorliegen. Durch Ausfällen können aus Dispersionen, Sole oder Suspensionen Pulver erhalten werden.

### Komponente E

Die erfindungsgemäßen Formmassen können im allgemeinen 0,01 bis 25 Gew.-Teile Flammschutzmittel enthalten. Beispielhaft werden als Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg- Al-hydroxid, anorganische Verbindungen wie Aluminiumoxide, Titandioxide, Antimonoxide, Barium-metaborat, Hydroxoantimonat, Zirkon-oxid, Zirkonhydroxid, Molybden-oxid, Ammonium-molybdat, Zinn-borat, Ammonium-borat, Barium-metaborat und Zinnoxid sowie Siloxanverbindungen genannt.

Als Flammschutzverbindungen können ferner Phosphorverbindungen, wie sie in EP-A 363 608, EP-A 345 522 oder EP-A 640 655 beschrieben sind, eingesetzt werden.

Solche Phosphorverbindungen sind beispielsweise Phosphor-Verbindungen der Formel (III) 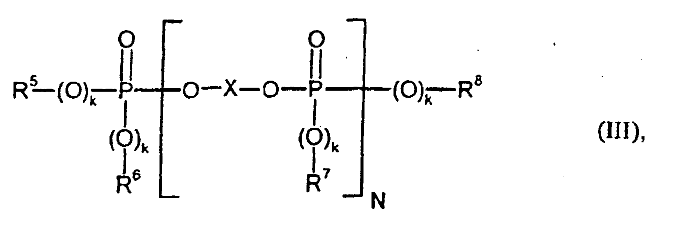 in welcher
- R⁵, R⁶, R⁷ und R⁸,: unabhängig voneinander jeweils gegebenenfalls halogeniertes C₁-C₈-Alkyl, jeweils gegebenenfalls durch Alkyl, vorzugsweise C₁-C₄-Alkyl, und/oder Halogen, vorzugsweise Chlor, Brom, substituiertes C₅-C₆-Cycloalkyl, C₆-C₃₀-Aryl oder C₇-C₁₂-Aralkyl bedeuten.

Bevorzugt stehen R⁵, R⁶, R⁷ und R⁸ unabhängig voneinander für C₁-C₄-Alkyl, Phenyl, Naphthyl oder Phenyl-C₁-C₄-alkyl. Die aromatischen Gruppen R⁵, R⁶, R⁷ und R⁸ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (III) bedeutet einen ein- oder mehrkernigen aromatischen Rest mit 6 bis 30 C-Atomen. Dieser leitet sich vorzugsweise von Diphenolen der Formel (I) ab. Besonders bevorzugt sind Diphenylphenol, Bisphenol A, Resorcin oder Hydrochinon oder deren chlorierte oder bromierte Derivate.
- k: in der Formel (III) kann, unabhängig voneinander, 0 oder 1 sein, vorzugsweise ist n gleich 1.
- N: steht für Werte von 0 bis 30, vorzugsweise für 0 bzw. einen durchschnittlichen Wert von 0,3 bis 20, besonders bevorzugt 0,5 bis 10, insbesondere 0,5 bis 6.

Mischungen aus Phosphorverbindungen der Formel (III) enthalten vorzugsweise 10 bis 90 Gew.-%, vorzugsweise 12 bis 40 Gew.-%, wenigstens einer Monophosphorverbindung und wenigstens einer oligomeren Phosphorverbindung beziehungsweise eines Gemisches von oligomeren Phosphorverbindungen in Mengen von 10 bis 90 Gew.-%, vorzugsweise 60 bis 88 Gew.-%, bezogen auf die Gesamtmenge an Phosphorverbindungen.

Monophosphorverbindungen der Formel (III) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Mischungen aus Monomeren und oligomeren Phosphorverbindungen der Formel (III) weisen durchschnittliche N-Werte von 0,3 bis 20, bevorzugt 0,5 bis 10, insbesondere von 0,5 bis 6 auf.

Die Phosphorverbindungen gemäß Formel (III) sind bekannt (vgl. z.B. EP-A 363 608, EP-A 640 655, EP-A 542 522) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Weitere phosphorhaltige Verbindungen, die als Flammschutzmittel eingesetzt werden können, sind lineare Phosphazene gemäß Formel (IIIa) und cyclische Phosphazene gemäß Formel (IIIb) 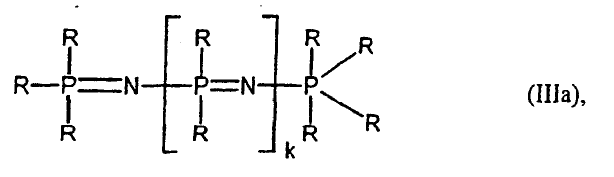 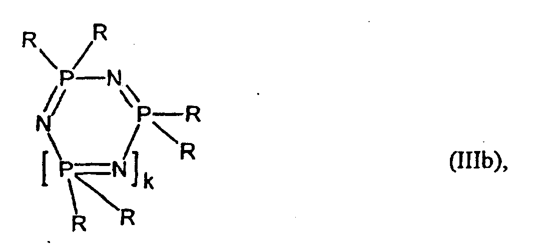 wobei:
- R: jeweils gleich oder verschieden ist und für Amino, jeweils gegebenenfalls halogeniertes, vorzugsweise mit Fluor halogeniertes C₁- bis C₈-Alkyl, oder C₁- bis C₈- Alkoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, C₆- bis C₂₀-Aryl, vorzugsweise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht,

### Beispielhaft seien genannt:

Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (IIIa) und (IIIb) können verschieden sein.

Die Phosphazene und deren Herstellung sind beispielsweise in EP-A 728811, DE-A 1961668 und WO 97/40092 beschrieben.

Die erfindungsgemäßen Formmassen können gegebenenfalls von Verbindungen der Formel (III), (IIIa) und (IIIb) verschiedene Flammschutzmittel in einer Menge bis zu 20 Gew.-Teilen enthalten. Bevorzugt sind synergistisch wirkende Flammschutzmittel. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze oder Siloxanverbindungen genannt. Die erfindungsgemäßen Formmassen können gegebenenfalls von den anorganischen Verbindungen D abweichende anorganische Substanzen enthalten wie beispielsweise anorganische Hydroxidverbindungen wie Mg-, Al-hydroxid, anorganische Verbindungen wie Aluminiumoxid, Antimonoxide, Bariummetaborat, Hydroxoantimonat, Zirkoniumoxid, Zirkonhydroxid, Molybdänoxid, Ammoniummolybdat, Zinkborat, Ammoniumborat, Bariummetaborat und Zinnoxid.

Bevorzugte Flammschutzmittel sind ausgewählt aus Phosphorverbindungen der Formeln (III), (IIIa) und (IIIb) oder Mischungen davon. Besonders bevorzugt sind Verbindungen der Formel (III).

Ferner können die erfindungsgemäßen thermoplastischen Formmassen feinstteilige anorganische Verbindungen enthalten, die sich günstig auf die Flammschutzeigenschaften der erfindungsgemäßen Formmassen auswirken. Diese anorganischen Verbindungen umfassen Verbindungen eines oder mehrerer Metalle der 1. bis 5. Hauptgruppe der 1. bis 8. Nebengruppe des Periodensystems, bevorzugt der 2. bis 5. Hauptgruppe der 4. bis 8. Nebengruppe, besonders bevorzugt der 3. bis 5. Hauptgruppe der 4. bis 8. Nebengruppe mit den Elementen Sauerstoff, Schwefel, Bor, Phosphor, Kohlenstoff, Stickstoff, Wasserstoff und/oder Silicium, wobei Zinkverbindungen gemäß Komponente D) davon ausgenommen sind.

Bevorzugte Verbindungen sind beispielsweise Oxide, Hydroxide, wasserhaltige Oxide, Sulfate, Sulfite, Sulfide, Carbonate, Carbide. Nitrate, Nitrite, Nitride, Borate, Silikate, Phosphate, Hydride, Phosphite oder Phosphonate.

Bevorzugte feinstteilige anorganischen Verbindungen sind beispielsweise TiN, TiO₂, SnO₂,WC, Al₂O₃, AlO(OH), ZrO₂, Sb₂O₃, SiO₂, Eisenoxide, NaSO₄, BaSO₄, Vanadiumoxide, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Weiterhin können fluorierte Polyolefine zugesetzt werden. Die fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0.05 bis 1.000, vorzugsweise 0,08 bis 20 µm. Im allgemeinen haben die fluorierten Polyolefine eine Dichte von 1,2 bis 2,3 g/cm³.

Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate.

Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-lnterscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Grow-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3671487, 3723373 und 338092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drucken von 7 bis 71 kg/cm² und bei Temperaturen von 0 bis 200°C, vorzugsweise bei Temperaturen von 20 bis 100°C. (Nähere Einzelheiten siehe z.B. US-Patent 2 393 967). Je nach Einsatzform kann die Dichte dieser Materialien zwischen 1,2 und 2,3 g/cm³, die mittlere Teilchengröße zwischen 0,05 und 1.000 nm liegen.

Erfindungsgemäß bevorzugte fluorierte Polyolefine sind Tetrafluorethylenpolymerisate und haben mittlere Teilchendurchmesser von 0,05 bis 20 µm, vorzugsweise 0,08 bis 10 µm, und eine Dichte von 1,2 bis 1,9 g/cm³. Sie werden vorzugsweise in Form einer koagulierten Mischung von Emulsionen der Tetrafluorethylenpolymerisate mit Emulsionen der Pfropfpolymerisate C eingesetzt.

Geeignete, in Pulverform einsetzbare fluorierte Polyolefine sind Tetrafluorethylenpolymerisate mit mittleren Teilchendurchmessern von 100 bis 1.000 µm und Dichten von 2,0 g/cm³ bis 2,3 g/cm³.

Zur Herstellung einer koagulierten Mischung aus C und dem fluorierten Polyolefin wird zuerst eine wäßrige Emulsion (Latex) eines Pfropfpolymerisates C mit mittleren Latexteilchendurchmessern von 0,05 bis 2 µm, insbesondere 0,1 bis 0,6 µm, mit einer feinteiligen Emulsion eines fluorierten Polyolefins in Wasser mit mittleren Teilchendurchmessern von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%.

Die wäßrige Emulsion des Pfropfpolymerisats C besitzt Feststoffgehalte von 25 bis 60 Gew.-%, vorzugsweise von 30 bis 45 Gew.-%, insbesondere von 30 bis 35 Gew.-%.

Die Mengenangabe bei der Beschreibung der Komponente C schließt den Anteil des Pfropfpolymerisats in der koagulierten Mischung aus Pfropfpolymerisat und fluorierten Polyolefinen nicht mit ein.

In der Emulsionsmischung liegt das Gewichtsverhältnis Pfropfpolymerisat C zum fluorierten Polyolefins bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Als Füll- und Verstärkungsmaterialien sind in den thermoplastischen Formmassen beispielsweise Glasfasern, gegebenenfalls geschnitten oder gemahlen. Glasperlen, Glaskugeln, blättchenförmiges Verstärkungsmaterial, wie Kaolin, Talk, Glimmer, Silicate, Quarz, Talkum, Titandioxid, Wollastonit, Mika, Kohlefasern oder deren Mischung geeignet. Vorzugsweise werden als Verstärkungsmaterial geschnittene oder gemahlene Glasfasern eingesetzt. Bevorzugte Füllstoffe, die auch verstärkend wirken können sind Glaskugeln, Glimmer, Silikate, Quarz, Talkum, Titandioxid, Wollastonit.

Die gefüllten bzw. verstärkten Formmassen können bis zu 60, vorzugsweise 10 bis 40 Gew.-%, bezogen auf die gefüllte bzw. verstärkte Formmasse, Füll- und/oder Verstärkungsstoffe enthalten.

Die erfindungsgemäßen Formmassen können weiterhin übliche Additive, wie Anti-Dripping-Mittel, Gleit- und Entformungsmittel, Nukleierungsmittel, Antistatika, Stabilisatoren, Füll- und Verstärkungsstoffe sowie Farbstoffe und Pigmente enthalten.

Die erfindungsgemäßen Formmassen, enthaltend Komponenten A bis E und gegebenenfalls weitere Additive, werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert oder schmelzextrudiert, wobei die fluorierten Polyolefine vorzugsweise in Form der bereits erwähnten koagulierten Mischung eingesetzt werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Forrnkörpern jeder Art verwendet werden. Insbesondere können Formkörpern durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, wie Computer, Drucker, Monitore oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

### Beispiele

### Komponente A

Polycarbonat auf Basis Bisphenol A mit einer relativen Lösungsviskosität von 1.252, gemessen in Methylenchlorid bei 25°C und in einer Konzentration von 0.5 g/100 ml.

### Komponente B

Styrol/Acrylnitril-Copolymerisat mit einem Styrol/Acrylnitril-Verhältnis von 72:28 und einer Grenzviskosität von 0.55 dl/g (Messung in Dimethylformamid bei 20°C).

### Komponente C

Pfropfpolymerisat von 40 Gew.-Teilen Styrol und Acrylnitril im Verhältnis von 73:27 auf 60 Gew.-Teile teilchenförmigen vemetzten Polybutadienkautschuk (mittlerer Teilchendurchmesser d₅₀ = 0.3 µm), hergestellt durch Emulsionspolymerisation.

### Komponente D

Als feinstteilige anorganische Verbindungen werden Sachtholit HD Sachtlebenchemie, Duisburg, Deutschland (D1), ein Zinksulfid, sowie Firebrake ZB, Nordmann, Rassmann GmbH & Co, Hamburg, Deutschland (D2), ein Zinkborat eingesetzt. Die mittlere Teilchengröße dieser Materialien beträgt ca. 350 nm respektive ca. 7 µm.

### Komponente E

Als Flammschutzmittel wird Komponente E.1) Formel (IV) eingesetzt.

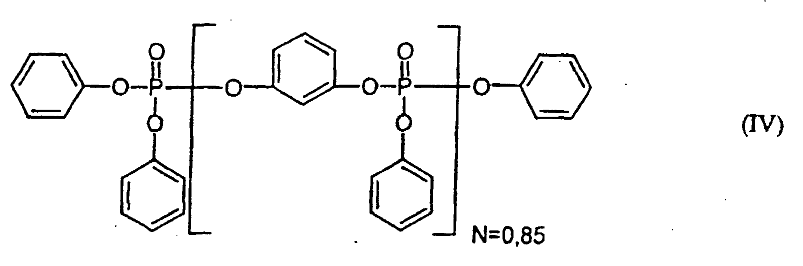

Tetrafluorethylenpolrimerisat Komponente E.2) wird als koagulierte Mischung aus einer SAN-Pfropfpolymerisat-Emulsion gemäß Komponente C in Wasser und einer Tetrafluorethylenpolymerisat-Emulsion in Wasser eingesetzt. Das Gewichtsverhältnis Pfropfpolymerisat C zum Tetrafluorethylenpolymerisat E in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

### Herstellung von E-2:

Die Emulsion des Tetrafluorethylenpolymerisats (Teflon 30 N der Fa. DuPont) wird mit der Emulsion des SAN-Pfropfpolymerisats C vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann zusammen mit dem Flammschutzmittel gemäß Formel (IV) und mit den weiteren Komponenten in den beschriebenen Aggregaten compoundiert werden.

### Herstellung und Prüfung der erfindungsgemäßen Formmassen

Das Mischen der Komponenten A bis F erfolgt auf einem 3 1-Innenkneter. Die Formkörper werden auf einer Spritzgießmaschine Typ Arburg 270E bei 260°C hergestellt.

Das Spannungsrißverhalten wird an Stäben der Abmessung 80 x 10 x 4 mm, Massetemperatur 260°C untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 1.2 bis 2.4 %) und bei Zimmertemperatur im Testmedium gelagert. Das Spannungsrißverhalten wird über die Rißbildung in Abhängigkeit von der Vordehnung bzw. den Bruch in Abhängigkeit von der Expositionszeit im Testmedium beurteilt.

Die Fließnahtfestigkeit (Bindenaht) aₙ wird nach der Methode DIN 53453 bestimmt.

Die Bestimmung des Rohtons (Yellowness Index YI) wird nach ASTM D 1925 bestimmt.

Der MVR (Schmelzevolumenfließrate) Wird nach ISO 1133 bestimmt.

Der Zug-E-Modul wird nach Methode ISO 527 gemessen.

Die Reißdehnung wird im Rahmen der Bestimmung des Zug-E-Moduls nach Methode ISO 527 an F3 Schulterstäben bestimmt.

Die Zusammensetzung der geprüften Materialien sowie die erhaltenen Daten sind in der folgenden Tabelle 1 zusammengefaßt.

**Tabelle 1**

| Komponenten (Gew.-Tle) | Vergleich 1 | 2 | Vergleich 3 | 4 |
|---|---|---|---|---|
| A | 42,62 | 42,30 | 42,62 | 42,20 |
| B | 32,71 | 32,46 | 32,71 | 32,38 |
| C | 23,79 | 23,61 | 23,79 | 23,55 |
| D1 | - | 0,74 | - | - |
| D2 | | | | 0,98 |
| Additive | 0,89 | 0,89 | 0,89 | 0,89 |
| | | | | |

| Eigenschaften | | | | |
|---|---|---|---|---|
| Rohton YI | 36,15 | 21,95 | 36,15 | 32,16 |
| Helligkeit | 88,09 | 93,01 | 88,09 | 89,11 |
| MVR [260°C/5 kg] | 9,98 | 11,20 | 9,98 | 12,34 |
| ak Izod 260°C [-40°C, zäh] | 60,2 | 72,5 | 59,2 | 69,4 |
| Reißdehnung DR [%] | 31,7 | 49,1 | 31,7 | 54,8 |

## Patentansprüche

1. Thermoplastische Formmassen enthaltend
A. 40 bis 98 Gew.-Teile aromatisches Polycarbonat,
B. 0 bis 50 Gew.-Teile Vinylcopolymerisat,
C. 0.5 bis 60 Gew.-Teile Pfropfpolymerisat,
D. 0.1 bis 30 Gew.-Teile Zinkborat mit einem mittleren Teilchendurchmesser von 1 nm bis 20 µm.

2. Formmassen gemäß Anspruch 1, wobei der mittlere Teilchendurchmesser des Zinkborats 1 nm bis 10 µm beträgt.

3. Formmassen gemäß Anspruch 1, enthaltend 50 bis 95 Gew.-Teile eines aromatischen Polycarbonats A.

4. Formmassen gemäß Anspruch 1, enthaltend Pfropfpolymerisate C hergestellt durch Copolymerisation von 5 bis 95 Gew.-Teilen einer Mischung aus
50 bis 95 Gew.-Teilen Styrol, α-Methylstyrol, halogen- oder alkylkemsubstituiertern Styrol, C₁-C₈-Alkylmethacrylat, C₁-C₈-Alkylacrylat oder Mischungen dieser Verbindungen und
5 bis 50 Gew.-Teilen Acrylnitril, Methacrylnitril, C₁-C₈-Alkylmethacrylat, C₁-C₈-Alkylacrylat. Maleinsäureanhydrid, C₁-C₄-alkyl- bzw. phenyl-N-substituiertern Maleinimid oder Mischungen dieser Verbindungen auf
5 bis 95 Gew.-Teile Kautschuk mit einer Glasübergangstemperatur unter -10°C.

5. Formmasse nach Anspruch 1, **dadurch gekennzeichnet, dass** sie als Flammschutzmittel Phosphorverbindungen enthält.

6. Formmasse nach Anspruch 5, **dadurch gekennzeichnet, dass** sie Phosphorverbindungen der Formel (III) enthalten 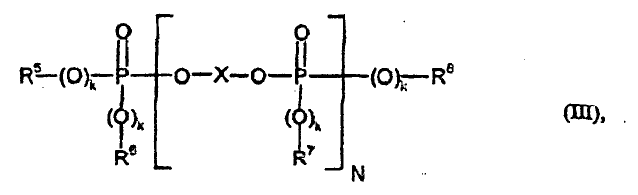 in welcher
R⁵, R⁶, R⁷ und R⁸, unabhängig voneinander jeweils gegebenenfalls halogeniertes C₁-C₈-Alkyl, jeweils gegebenenfalls durch Alkyl und/oder Halogen, Brom, substituiertes C₅-C₆-Cycloalkyl, C₆-C₃₀Aryl oder C₇-C₁₂-Aralkyl,
k unabhängig voreinander. 0 oder 1,
N 0 bis 30,
X einen ein- oder mehrkernigen aromatischen Rest mit 6 bis 30 C-Atomen bedeutet,
enthalten.

7. Fonnmassen nach Ansprüchen 1 bis 6, **dadurch gekennzeichnet, daß** sie 0.01 bis 20 Gew.-%. bezogen auf die Gesamtformmasse wenigstens eines weiteren anderen Flammschutzmittels enthalten.

8. Formmassen nach einem der Ansprüche 1 bis 7, wobei sie mindestens einen Zusatz aus der Gruppe der Stabilisatoren, Pigmente, Entformungsmittel, Fließhilfsmittel und/oder Antistatika enthalten.

9. Verwendung der Formmassen nach einem der vorhergehenden Ansprüche zur Herstellung von Formkörpern.

10. Formkörper, hergestellt aus Formmassen nach einem der vorhergehenden Ansprüche.

## Claims

1. Thermoplastic moulding compositions comprising
A. 40 to 98 parts by wt. of an aromatic polycarbonate,
B. 0 to 50 parts by wt. of a vinyl copolymer,
C. 0.5 to 60 parts by wt. of a graft polymer,
D. 0.1 to 30 parts by wt. of zinc borate with an average particle diameter of 1 nm to 20 µm.

2. Moulding compositions according to claim 1, wherein the average particle diameter of the zinc borate is 1 nm to 10 µm.

3. Moulding compositions according to claim 1, comprising 50 to 95 parts by wt. of an aromatic polycarbonate A.

4. Moulding compositions according to claim 1, comprising graft polymers C prepared by copolymerization of
5 to 95 parts by wt. of a mixture of
50 to 95 parts by wt. styrene, α-methylstyrene, styrene substituted on the nucleus by halogen or alkyl, C₁-C₈-alkyl methacrylate, C₁-C₈-alkyl acrylate or mixtures of these compounds and
5 to 50 parts by wt. acrylonitrile, methacrylonitrile, C₁-C₈-alkyl methacrylate, C₁-C₈-alkyl acrylate, maleic anhydride, C₁-C₄-alkyl or phenyl-N-substituted maleimide or mixtures of these compounds on
5 to 95 parts by wt. rubber having a glass transition temperature below -10°C.

5. Moulding composition according to claim 1, **characterized in that** it comprises phosphorus compounds as flameproofing agents.

6. Moulding composition according to claim 5, **characterized in that** it comprises phosphorus compounds of the formula (III) 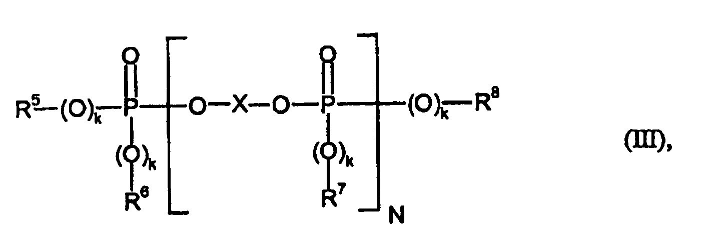 in which
R⁵, R⁶, R⁷ and R⁸ independently of one another in each case denotes optionally halogenated C₁-C₈-alkyl, or C₅-C₆-cycloalkyl, C₆-C₃₀-aryl or C₇-C₁₂-aralkyl, in each case optionally substituted by alkyl and/or halogen, bromine,
k independently of one another denotes 0 or 1,
N denotes 0 to 30,
X denotes a mono- or polynuclear aromatic radical having 6 to 30 C atoms.

7. Moulding compositions according to claims 1 to 6, **characterized in that** they comprise 0.01 to 20 wt.%, based on the total moulding composition, of at least one other further flameproofing agent.

8. Moulding compositions according to one of claims 1 to 7, which comprise at least one additive from the group consisting of stabilizers, pigments, mould release agents, flow auxiliaries and/or antistatics.

9. Use of the moulding compositions according to one of the preceding claims for the production of shaped articles.

10. Shaped articles produced from moulding compositions according to one of the preceding claims.

## Revendications

1. Matières à mouler thermoplastiques contenant :
A. 40 à 98 parties en poids d'un polycarbonate aromatique ;
B. 0 à 50 parties en poids d'un copolymère vinylique ;
C. 0,5 à 60 parties en poids d'un polymère greffé ;
D. 0,1 à 30 parties en poids de borate de zinc ayant une granulométrie moyenne de 1 nm à 20 µm.

2. Matières à mouler selon la revendication 1, où la granulométrie moyenne du borate de zinc est de 1 nm à 10 µm.

3. Matières à mouler selon la revendication 1, contenant 50 à 95 parties en poids d'un polycarbonate aromatique A.

4. Matières à mouler selon la revendication 1, contenant des polymères greffés C préparés par copolymérisation de :
5 à 95 parties en poids d'un mélange de :
50 à 95 parties en poids de styrène, α-méthylstyrène, styrène substitué sur le noyau par halogène ou alkyle, méthacrylate de C₁-C₈alkyle, acrylate de C₁-C₈-alkyle, ou des mélanges de ces composés, et
5 à 50 parties en poids d'acrylonitrile, méthacrylonitrile, méthacrylate de C₁-C₈-alkyle, acrylate de C₁-C₈-alkyle, anhydride maléique, maléimide substitué sur N par C₁-C₄-alkyle ou phényle, ou des mélanges de ces composés, sur
5 à 95 parties en poids d'un caoutchouc ayant une température de transition vitreuse inférieure à -10°C.

5. Matière à mouler selon la revendication 1 **caractérisée en ce qu'**elle contient des composés du phosphore comme ignifugeant.

6. Matière à mouler selon la revendication 5 **caractérisée en ce qu'**elle contient des composés du phosphore de formule (III) : 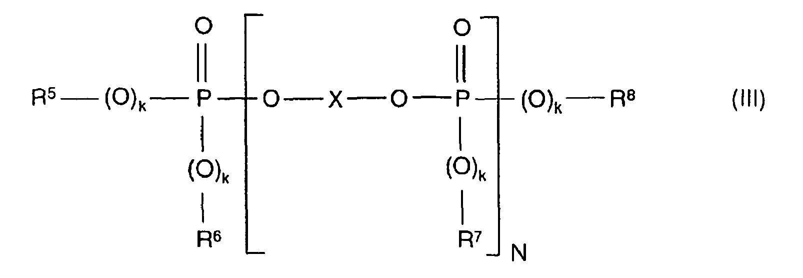 dans laquelle :
R⁵, R⁶, R⁷ et R⁸ représentent indépendamment les uns des autres C₁-C₈-alkyle, le cas échéant halogéné, C₅-C₆-cycloalkyle, C₆-C₃₀ aryle ou C₇-C₁₂ aralkyle le cas échéant substitués par alkyle et/ou halogène, le brome ;
k représente indépendamment les uns des autres 0 ou 1 ;
N représente 0 à 30, et
X représente un groupement aromatique mono- ou polycyclique, ayant 6 à 30 atomes C.

7. Matières à mouler selon les revendications 1 à 6 **caractérisées en ce qu'**elles contiennent 0,01 à 20 % en poids, sur la base de la matière à mouler totale, d'au moins un autre Ignifugeant.

8. Matières à mouler selon l'une quelconque des revendications 1 à 7 où elles contiennent au moins un additif du groupe des stabilisants, pigments, agents de démoulage, adjuvants d'écoulement et/ou antistatiques.

9. Utilisation des matières à mouler selon l'une quelconque des revendications précédentes pour la préparation d'articles moulés.

10. Article moulé préparé à partir des matières à mouler selon l'une quelconque des revendications précédentes.
